Europäisches Patentamt

(19) European Patent Office

Office européen des brevets

(11) Numéro de publication: **0 024 244**
**B1**

(12) **FASCICULE DE BREVET EUROPEEN**

(45) Date de publication du fascicule du brevet: **05.12.84**

(21) Numéro de dépôt: **80401173.2**

(22) Date de dépôt: **08.08.80**

(51) Int. Cl.³: **B 64 F 1/02**

(54) **Ensemble de supports rétractiles pour un câble d'arrêt à travers une piste d'envol ou d'atterrissage d'avions.**

(30) Priorité: **10.08.79 FR 7920491**

(43) Date de publication de la demande:
**25.02.81 Bulletin 81/08**

(45) Mention de la délivrance du brevet:
**05.12.84 Bulletin 84/49**

(84) Etats contractants désignés:
**DE GB SE**

(56) Documents cités:
**FR-A-1 561 564**
**FR-A-2 026 106**
**FR-A-2 160 971**
**GB-A-1 449 141**
**US-A-3 146 974**
**US-A-3 148 849**
**US-A-3 410 509**
**US-A-3 807 669**

(73) Titulaire: **AERAZUR EFA**
**58, Boulevard Galliéni**
**F-92130 Issy les Moulineaux (FR)**

(72) Inventeur: **Aglae, Gilbert**
**51, Avenue des Pinsons Mondétour**
**F-91400 Orsay (FR)**
Inventeur: **Alavoine, Jacques**
**81, Route de Saint Germain Villiers Saint**
**Frédéric**
**F-78640 Neauphle le Chateau (FR)**
Inventeur: **Contensou, Claude**
**7, Rue de la Mare**
**F-75020 Paris (FR)**
Inventeur: **Rousseau, Jacques**
**14, Rue du Breuil**
**F-91360 Epinay sur Orge (FR)**
Inventeur: **Cerati, Célestin**
**Résidence des Arcades**
**F-91160 Longjumeau (FR)**

(74) Mandataire: **Collignon, Pierre et al**
**Cabinet Collignon 6, rue de Madrid**
**F-75008 Paris (FR)**

Courier Press, Leamington Spa, England.

## Description

La présente invention se rapporte à des perfectionnements concernant le fonctionnement des systèmes de relevage et d'effacement des barrières d'arrêt d'avions.

Actuellement, sur les pistes d'envol et d'atterrissage, ces systèmes sont sous forme d'un filet se relevant devant l'avion en difficulté ou d'un câble ou brin traversant la piste pour les avions munis d'une crosse.

Le principal objet de la présente invention est de fournir plus de possibilités concernant l'emploi du système de supports rétractiles d'un câble traversier.

Le système le plus employé consiste à rétracter, dans une rainure faite dans la piste, le câble traversier de façon que celui-ci ne constitue aucun obstacle au passage de certains avions et ensuite à le remettre en position haute afin qu'il puisse être accroché par une crosse en cas de besoin.

La rétraction du câble est obtenue par la mise en place dans la piste de nombreux petits vérins (15 à 20 suivant la largeur de la piste) alimentés individuellement par du gaz comprimé à partir de bouteilles installées sur un côté de la piste.

Par ailleurs, au cours du relevage, un système à tringlerie fait déplacer latéralement les supports du câble afin que celui-ci ne reste pas à la verticale de son logement dans la piste ce qui rendrait possible un effacement éventuel du brin au moment du passage d'un avion crosse baissée. (Un système du type défini ci-dessus est présenté dans la demande FR—A—2026106).

Tous les vérins doivent être parfaitement alignés dans la piste, ce qui implique des travaux importants d'infrastructure avec mise en place de béton, et fonctionner correctement quelles que soient les conditions climatiques et l'état de propreté. Il va sans dire qu'un tel système demande une maintenance lourde et délicate et l'installation d'instruments de contrôle sur chacun des vérins pour être certain que le câble est en position correcte lorsqu'un avion se présente crosse baissée et en difficulté.

En conséquence, afin de pallier ces inconvénients, la demanderesse a étudié un système de supports rétractiles du genre défini dans le préambule de la revendication 1 (connu du document FR—A—2026106) en révisant point par point tous les principes établis, pour simplifier la réalisation, l'installation et la maintenance du système. Les moyens définis dans la portie caractérisante de la revendication 1 permettent d'atteindre cet objectif.

Dans ce système, le déplacement du câble traversier au niveau de son support est la combinaison de deux mouvements: l'un dirigé de bas en haut est obtenu par un organe transformant un mouvement moteur en un mouvement vertical de va-et-vient; l'autre latéral, pour éviter que le câble reste au-dessus de son logement dans la piste, est obtenu par rotation du support autour d'un axe fixe avec un bras de levier convenable.

Tous les éléments nécessaires à l'obtention du déplacement du moyens de support de câble traversier à partir du mouvement moteur sont liés mécaniquement pour qu'on soit sûr que, si l'un d'eux a bougé, tous les autres se sont déplacés.

Avec de tels blocs-vérins, il est possible de n'avoir qu'un seul organe moteur installé sur un côté de la piste et relié à chacun des supports du câble traversier. Cette liaison est conçue pour travailler toujours en traction dans le cas d'une solution avec mouvement de va-et-vient. En outre, ce système n'a pas besoin d'être équipé de contrôles de position sur chacun des vérins, un seul suffit au niveau de l'élément moteur.

L'organe moteur peut être autonome — cas d'une alimentation en gaz comprimé à partir d'une bouteille, par exemple — ou raccordé à un réseau électrique ou autre.

Un autre avantage réside dans le fait que cette conception permet de définir des ensembles présentant un encombrement réduit et des formes simples pouvant être obtenues facilement dans la piste par usinage du béton. La qualité courante de cet usinage est suffisante pour assurer un alignement satisfaisant des blocs-vérins sans prévoir des organes de réglage et éviter l'emploi de nouvea béton qui augmente inévitablement la durée d'indisponibilité de la piste durant l'installation du dispositif.

Enfin, la simplicité de ce système rend possible la mise en place de cordons standards de chauffage pour éviter tout blocage sur de la glace et permet une maintenance aisée et non contraignante.

Pour bien faire comprendre l'invention, un exemple d'exécution est présenté sur les figures du dessin annexé, dans lequel:

la figure 1 est une vue en perspective de l'ensemble d'un câble traversier installé sur une piste;

la figure 2 est une vue schématique en perspective de l'ensemble transformant le mouvement moteur en mouvement ascendant et descendant du support du câble traversier;

la figure 3 est une vue d'une coupe située dans un plan vertical passant par le milieu d'un bloc-vérin, le câble étant en position relevée;

la figure 4 est une vue d'une coupe située dans un plan vertical passant entre deux blocs-vérins, le câble étant en position rétractée; et

la figure 5 est une vue schématique du système d'entraînement des blocs-vérins par l'ensemble moteur.

Dans l'exemple d'exécution présenté, le système rétractile du câble traversier comprend sur la piste d'envol ou d'atterrissage 1, un câble 2 relié à deux freins 3 situés de part et d'autre de l'axe de la piste et supporté par 15 ou

blocs-vérins 4 mus par un ensemble moteur 5 encastré dans le sol sur un côté de la piste 1.

Chaque bloc-vérin 4 est constitué d'un plan incliné 6 sur lequel prend appui un support de câble 7 pivotant autour d'un axe 8. Une liaison mécanique 9 assure l'appui permanent du support sur le plan incliné 6. Enfin, le support 7 soutient le bloc 10 qui retient le câble traversier 2.

En position basse, le câble traversier est en dessous du niveau de la piste et en appui sur une auge 11.

Tous les blocs-vérins sont accrochés sur une liaison 12 soutenue par deux poulies 13 et reliée à l'ensemble moteur 5.

Dans cet exemple l'usinage du béton de la piste se limite à faire une rainure de 25 cm de profondeur environ et 6 cm de large et autant de perçages d'un diamètre de 160 mm qu'il y a de blocs-vérins.

Sel le fonctionnement de la partie, permettant l'effacement et le relevage du câble traversier, objet de la présente invention, est décrit dans ce qui suit.

Le système d'alimentation de l'ensemble moteur et la commande électrique qui agit sur son fonctionnement n'ont rien de particulier en soi et ne seront donc pas expliqués dans le détail. Il suffit seulement de mentionner que les éléments de commande électrique sont situés dans une petite armoire à proximité de la piste et qu'un pupitre dans la tour de contrôle permet de commander le relevage et l'effacement du câble traversier et de contrôler l'état potentiel du dispositif.

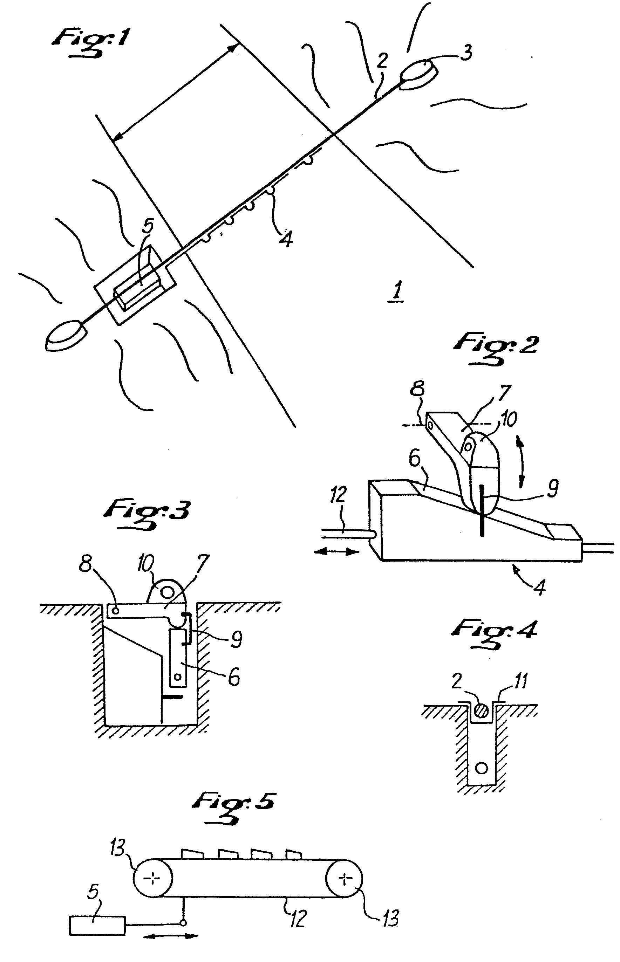

Lorsque l'ordre de relevage est donné depuis la tour de contrôle ou l'armoire située près de la piste, l'ensemble moteur 5 tire sur la liaison 12 (vers la droite des figures 2 et 5) en entraînant les plans inclinés 6 qui soulèvent et font pivoter les supports 7. La combinaison de ces deux mouvements fait sortir le câble de la piste et lui impose une translation suffisante pour qu'il ne soit plus à la verticale de son logement dans la piste. Un contacteur de fin de course arrête l'alimentation du moteur et indique que le câble est en bonne position. La résistance des supports 7 permet le passage d'un roue d'avion sur eux sans détérioration.

Pour effacer le câble traversier dans la piste, un ordre est donné depuis la tour ou l'armoire et l'ensemble moteur 5 tire à nouveau, mais dans l'autre sens, sur la liaison 12 en entraînant les plans inclinés 6 qui font descendre les supports 7 par l'intermédiaire des liaisons mécaniques 9. Un contacteur de fin de course arrête l'alimentation du moteur et indique que le câble est en position basse.

Bien entendu, la présente invention n'est pas limitée à l'exemple de réalisation qui vient d'être décrit.

## Revendication

1. Ensemble de supports rétractiles pour un câble d'arrêt à travers une piste d'envoi ou d'atterrissage d'avions comprenant une pluralité de blocs-vérins (4) supportant le câble (2) et encastrés dans la piste (1), chacun de ces blocs-vérins comprenant un bras de support (7) pivotant articulé d'un côté autour d'un axe (8) parallèle au câble d'arrêt (2) et présentant à son autre extrémité un moyen (10) de guidage dudit câble (2), caractérisé en ce que chaque bloc-vérin (4) comprend un élément mobile à rampe inclinée (6) se terminant par une partie supérieure plane horizontale, le bras de support (7) s'appuyant de façon permanente sur la rampe inclinée (6) au moyen d'une liaison mécanique (9) et en ce que lesdits éléments mobiles sont reliés entre eux et à un ensemble moteur unique (5) par une liaison double (12) sollicitée uniquement en traction par le moteur (5), aussi bien au relevage qu'à la rétraction du câble (2), permettant de commander simultanément le mouvement de tous les blocs-vérins (4).

## Patentanspruch

1. Einziehbare Stützanordnungen für ein Fangseil quer zur Flugzeugstart- oder -landebahn, die eine Mehrzahl von Hebeblöcke (4) aufweisen, welche das Fangseil (2) stützen und in die Bahn (1) eingelassen sind, wobei jeder Hebeblock einen Stützarm (7) besitzt, der an einer Seite um eine parallel zum Fangseil (2) verlaufende Achse (8) schwenkbar angelenkt und an der anderen Seite mit einem Führungsorgan (10) für das Fangseil (2) versehen ist, dadurch gekennzeichnet, daß jeder Hebeblock (4) ein bewegbares Element mit einer geneigten Rampe bzw. Führungsbahn (6) aufweist, die in einem oberen Teil mit einer horizontalen Ebene bzw. Fläche endet, daß sich der Stützarm (7) mit Hilfe einer mechanischen Verbindung (9) dauernd auf der geneigten Bahn (6) abstützt, und daß die bewegbaren Elemente untereinander und mit einem einzigen Motor (5) durch eine Doppelverbindung (12) verbunden sind, die vom Motor (5) sowohl zum Hochfahren als auch zum Einfahren des Seiles (27) nur durch einen Zug beansprucht ist und die Simultansteuerung der Bewegung aller Hebeblöcke (4) erlaubt.

## Claim

1. Set of retractable supports for an arresting cable across an aircraft take-off or landing field comprising a plurality of jacking blocks (4) supporting the cable (20) and embedded in the field (1), each of these jacking blocks comprising a support arm (7) pivotably hinged on one side about a shaft 8 parallel to the arresting cable (2) and having at its other end a means (10) for guiding said cable (2), characterized in that each jacking block (4) comprises a mobile element with inclined ramp (6) ending in a flat horizontal upper part, the support arm (7) bearing permanently on the inclined ramp (6) by means of a mechanical connection (9) and in that said mobile elements are connected together and to a single drive assembly (5) by a double connection (12) driven solely with a tractive force by the motor (5), not only for raising but also for retracting the cable (2), for controlling simultaneously the movement of all the jacking blocks (4).

Fig.1

Fig.2

Fig.3

Fig.4

Fig.5